# EUROPEAN PATENT APPLICATION

(11) **EP 4 851 927 A1**
(43) Date of publication of application: **09.12.2026**
(21) Application number: 26180273.0
(22) Date of filing: 21.05.2026
(51) Int. Cl.: G06T 9/00, G06N 3/045, G06N 3/08, G06V 10/82, H04N 19/85

(54) **IMAGE COMPRESSION BASED ON A SIZE THRESHOLD**

(30) Priority: 02.06.2025 US 202519225009
(71) Applicant: Capital One Services, LLC, McLean, Virginia 22102 (US)
(72) Inventor: PRIBBLE, Jason, McLean, VA 22102 (US); PATIL, Swapnil, McLean, VA 22102 (US); CARREON, Viviana, McLean, VA 22102 (US)
(74) Representative: Boult Wade Tennant LLP

(57) **Abstract**

In some implementations, a user device may receive an image as input and may determine that the image fails to satisfy a size threshold. The user device may provide the image to a neural network in order to receive an adjusted image. The neural network may be trained to adjust a size of the image, and the adjusted image may exhibit a lower quality than the image and a sharpness that satisfies a sharpness threshold. The user device may verify that the adjusted image satisfies the size threshold and may transmit the adjusted image to a service associated with the size threshold.

## Description

### BACKGROUND

Some image formats, such as a joint photographic experts group (JPEG) format, have a quality measurement. The quality measurement is generally proportional to size of an image. In other words, a higher quality image exhibits a greater size.

### SUMMARY

Some implementations described herein relate to a system for compressing an image based on a size threshold. The system may include one or more memories and one or more processors communicatively coupled to the one or more memories. The one or more processors may be configured to receive the image as input from a user. The one or more processors may be configured to determine that the image fails to satisfy the size threshold. The one or more processors may be configured to provide the image to a neural network in order to receive an adjusted image, wherein the neural network is trained to adjust a combination of padding around an object of interest and a size of the image, and wherein the adjusted image exhibits a lower quality than the image and a sharpness that satisfies a sharpness threshold. The one or more processors may be configured to verify that the adjusted image satisfies the size threshold. The one or more processors may be configured to transmit the adjusted image to a service associated with the size threshold.

Some implementations described herein relate to a method of compressing an image based on a size threshold. The method may include receiving, at a user device, the image as input. The method may include determining, by the user device, that the image fails to satisfy the size threshold. The method may include providing, by the user device, the image to a neural network in order to receive an adjusted image, wherein the neural network is trained to adjust a size of the image, and wherein the adjusted image exhibits a lower quality than the image and a sharpness that satisfies a sharpness threshold. The method may include verifying, by the user device, that the adjusted image satisfies the size threshold. The method may include transmitting the adjusted image from the user device and to a service associated with the size threshold.

Some implementations described herein relate to a non-transitory computer-readable medium that stores a set of instructions for compressing an image based on a size threshold. The set of instructions, when executed by one or more processors of a mobile device, may cause the mobile device to capture an image using an input component of the mobile device. The set of instructions, when executed by one or more processors of the mobile device, may cause the mobile device to receive, from a service, an indication of the size threshold. The set of instructions, when executed by one or more processors of the mobile device, may cause the mobile device to apply a neural network to the image, in response to the image failing to satisfy the size threshold, in order to generate an adjusted image, wherein the neural network is trained to adjust a size of the image while satisfying a sharpness threshold. The set of instructions, when executed by one or more processors of the mobile device, may cause the mobile device to provide the adjusted image to the service.

### BRIEF DESCRIPTION OF THE DRAWINGS

Fig. 1 is a diagram of an example implementation relating to image compression based on a size threshold, in accordance with some embodiments of the present disclosure.
Figs. 2A-2B are diagrams of example neural networks associated with image compression, in accordance with some embodiments of the present disclosure.
Fig. 3 is a diagram of an example environment in which systems and/or methods described herein may be implemented, in accordance with some embodiments of the present disclosure.
Fig. 4 is a diagram of example components of one or more devices of Fig. 3, in accordance with some embodiments of the present disclosure.
Fig. 5 is a flowchart of an example process relating to image compression based on a size threshold, in accordance with some embodiments of the present disclosure.

### DETAILED DESCRIPTION

The following detailed description of example implementations refers to the accompanying drawings. The same reference numbers in different drawings may identify the same or similar elements.

A quality measurement of a digital image is generally proportional to the size of the digital image. In other words, a higher quality image exhibits a greater size while a lower quality image exhibits a smaller size. Sometimes, when computers are exchanging data, size limits apply. For example, a receiving device may impose a size limit (e.g., to prevent denial of service (DoS) attacks). In another example, a device facilitating a communication between a transmitting device and the receiving device may impose a size limit (e.g., to reduce network overhead and congestion).

One way to modify an image to comply with a size limit is to reduce a quality of the image. However, using a binary search to find a best quality that still complies with the size limit is computationally costly and time-consuming. On the other hand, some neural networks may reduce size of an image while retaining maximal quality, but such neural networks are generally computationally complex and often are executed remotely. Therefore, a transmitting device would incur significant latency in transmitting an image to a neural network for size reduction and receiving a reduced image from the neural network.

Some implementations described herein enable a user device to execute a lightweight neural network locally to reduce size of an image to satisfy with a size threshold. Because the neural network is executed locally, the user device conserves network resources that would have been spent, and reduces latency that would have been incurred, were the user device to apply a remote neural network to reduce the size of the image. Additionally, the neural network is faster and less time-consuming than a binary search. In some implementations, the neural network may use fast Fourier convolution blocks and/or may include no more than six convolutional layers. As a result, speed and computationally efficiency of the neural network is further increased.

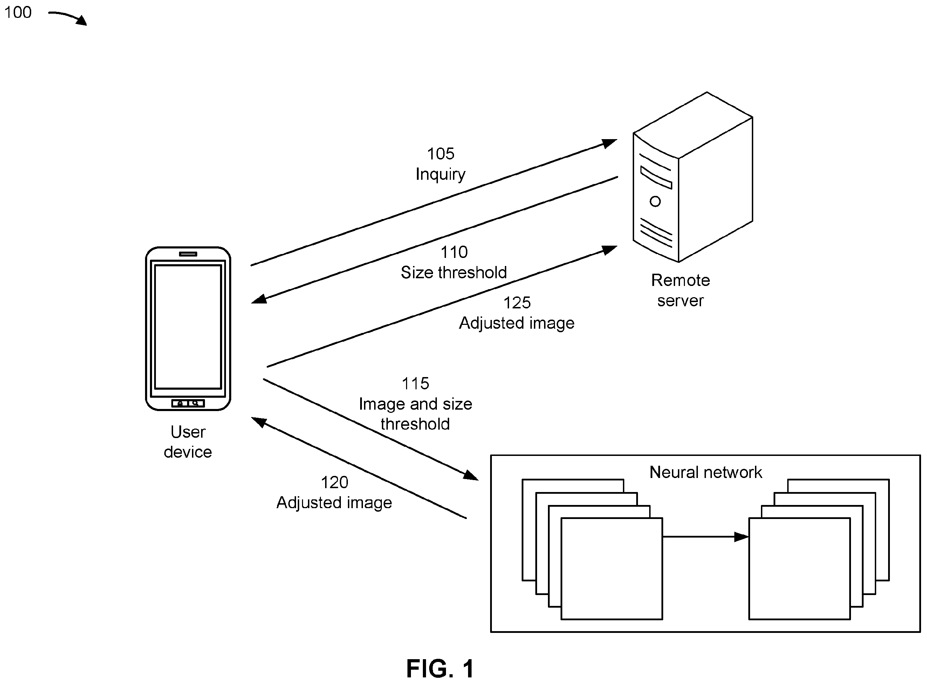

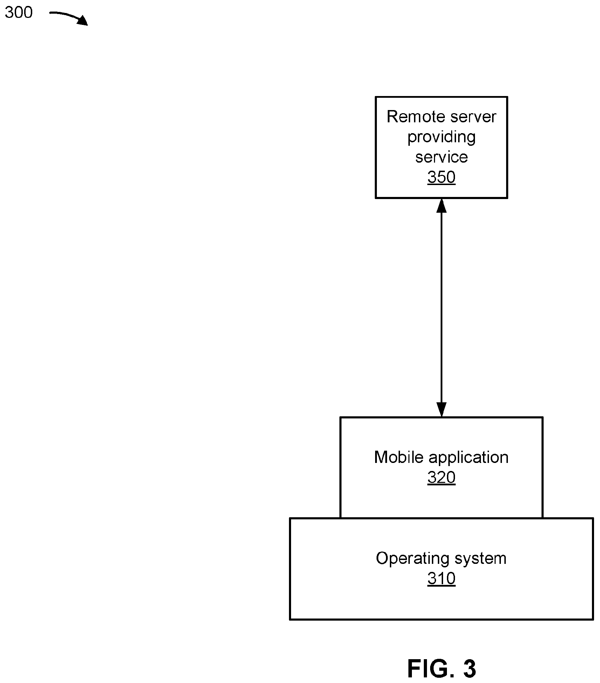

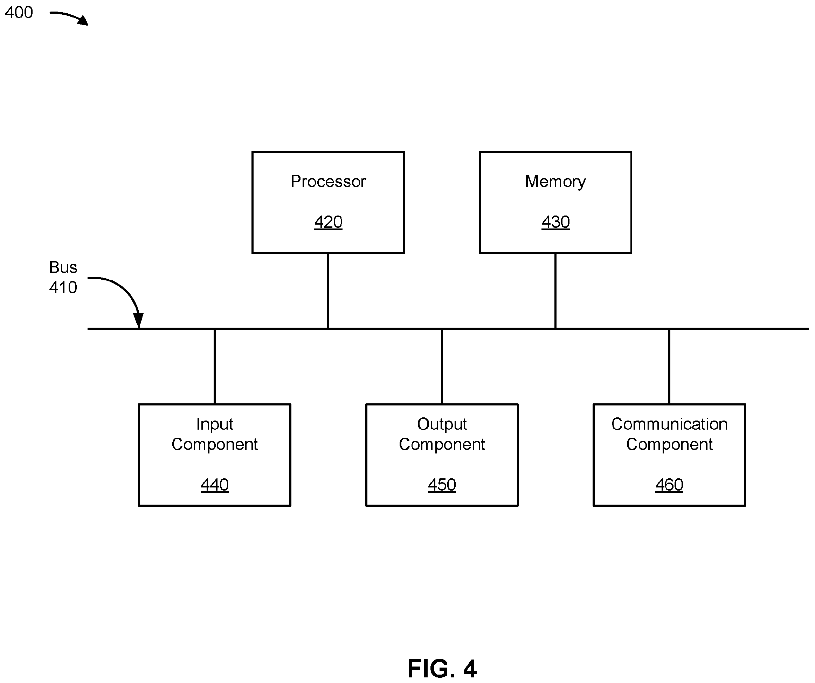

Fig. 1 is a diagram of an example implementation 100 associated with image compression based on a size threshold. As shown in Fig. 1, example implementation 100 includes a user device (e.g., implementing a neural network) and a remote server (e.g., providing a service). These devices are described in more detail below in connection with Fig. 3 and Fig. 4.

As shown by reference number 105, the user device may transmit, and the remote server may receive, an inquiry. The inquiry may include a hypertext transfer protocol (HTTP) request and/or an application programming interface (API) call. The inquiry may request a size threshold enforced by the remote server (e.g., on behalf of the service).

In some implementations, a user of the user device may provide input that triggers the user device to transmit the inquiry. In one example, the user may provide input (e.g., via an input component of the user device) that triggers a web browser (or another type of application executed by the user device) to navigate to a webpage hosted or controlled by (or at least associated with) the remote server (e.g., on behalf of the service). Accordingly, the user device may transmit the inquiry in response to navigating the webpage. In another example, the user may launch a mobile application (also referred to as an "app") that communicates with the remote server (e.g., in order to access the service). Accordingly, the app may trigger the user device to transmit the inquiry. In such examples, the user may interact with a user interface (UI) to trigger the user device to transmit the inquiry. In other examples, the user may provide text input (e.g., via a shell or a command line, among other examples) that triggers the user device to transmit the inquiry.

Alternatively, the user device may automatically transmit the inquiry. For example, the remote server may provide a background service to the user device (e.g., an email service or a text messaging service, among other examples). Because the background service may execute without input from the user, the user device may automatically determine to request the size threshold.

As shown by reference number 110, the remote server may transmit, and the user device may receive, an indication of the size threshold. The remote server may transmit, and the user device may receive, the indication in response to the inquiry from the user device. The indication may be included in an HTTP response and/or transmitted as a return from an API function. The indication may include an absolute value of the size threshold (e.g., in kilobytes or megabytes, among other examples) or a relative value of the size threshold (e.g., in pixels or megapixels or as an aspect ratio, among other examples).

Although the example 100 is described in connection with the user device receiving the indication of the size threshold from the remote server, other examples may include the user device receiving the indication from memory. In one example, the user device may have stored the indication in memory (e.g., from a previous communication with the remote server) and may retrieve the indication. In another example, the user device may use a default size threshold that is stored in memory. The default size threshold may have been stored in memory by the web browser or the app described above.

In some implementations, the user device may receive an image as input from the user. For example, the user may provide input that indicates a location of the image (e.g., a filename and/or a filepath, among other examples). Therefore, the user device may receive the image from a memory of the user device or from a remote device storing the image (e.g., a cloud storage, among other examples). Alternatively, the user device may capture the image using an input component of the user device (e.g., an image sensor, such as a camera). In some implementations, the user may provide input that triggers the input component to capture the image.

The user device may determine that the image fails to satisfy the size threshold. For example, the user device may determine that a size of the image (e.g., in kilobytes, megabytes, pixels, or megapixels, among other examples) fails to satisfy the size threshold. In another example, the user device may determine that an aspect ratio (or another property) of the image fails to satisfy the size threshold.

As shown by reference number 115, the user device may provide the image (optionally with an indication of the size threshold) to the neural network. For example, the user device may provide the image to the neural network in response to determining that the image fails to satisfy the size threshold. In some implementations, a mobile application, executed by the user device and communicating with the service (e.g., via the remote server), may apply the neural network to the image. Accordingly, the neural network may be executed by the mobile application (e.g., as part of code for the mobile application or as part of a library triggered directly by the mobile application). Alternatively, an operating system (OS) of the user device may apply the neural network to the image. Accordingly, the user device may provide the image to the OS with a request to apply the neural network.

As shown by reference number 120, the neural network may provide an adjusted image to the user device. For example, the user device may apply the neural network in order to generate the adjusted image. In some implementations, the mobile application may apply the neural network and thus receive the adjusted image directly. Alternatively, the OS of the user device may apply the neural network, and thus the OS may provide the adjusted image to the user device in response to the request to apply the neural network.

The neural network may be trained to adjust a size of the image (in order to satisfy the size threshold). Therefore, the adjusted image may satisfy the size threshold because the adjusted image exhibits a lower quality than the image. The neural network may adjust a size of the image while satisfying a sharpness threshold. Accordingly, the neural network may ensure that text in the image remains legible in the adjusted image (e.g., because one or more weights of the neural network are optimized for text legibility). Additionally, or alternatively, the neural network may adjust a size of the image while satisfying a brightness threshold and/or a (color) saturation threshold. Therefore, the adjusted image exhibits a lower quality than the image while satisfying the sharpness threshold, the brightness threshold, and/or the (color) saturation threshold.

In some implementations, the neural network may be trained to adjust padding, around an object of interest in the image, in combination with a size of the image. In one example, the user device may detect the object of interest in the image (e.g., an image of the user or text on an identification document, among other example) and may provide a mask, to the neural network, corresponding to the object of interest. In a particular example, the user device may detect a face in the image and provide a mask, to the neural network, corresponding to the face. In another example, the user device may detect an outline of the object of interest in the image and may indicate the outline to the neural network. Therefore, the neural network may reduce the padding around the object of interest in order to decrease a size of the image while retaining a minimum amount of padding (e.g., indicated by the remote server in addition to the size threshold). Additionally, or alternatively, the neural network may reduce a size of the image by reducing quality outside the object of interest (e.g., by performing inpainting, as described below) while retaining quality within the object of interest.

In some implementations, the neural network may include one or more fast Fourier convolution blocks. The fast Fourier convolution block(s) may quickly inpaint over background objects (e.g., identified using a mask or an outline, as described above) in order to reduce a size of the image while retaining quality for the object of interest. Additionally, or alternatively, the neural network may include no more than six convolutional layers. As a result, the neural network is fast and executable locally by the user device.

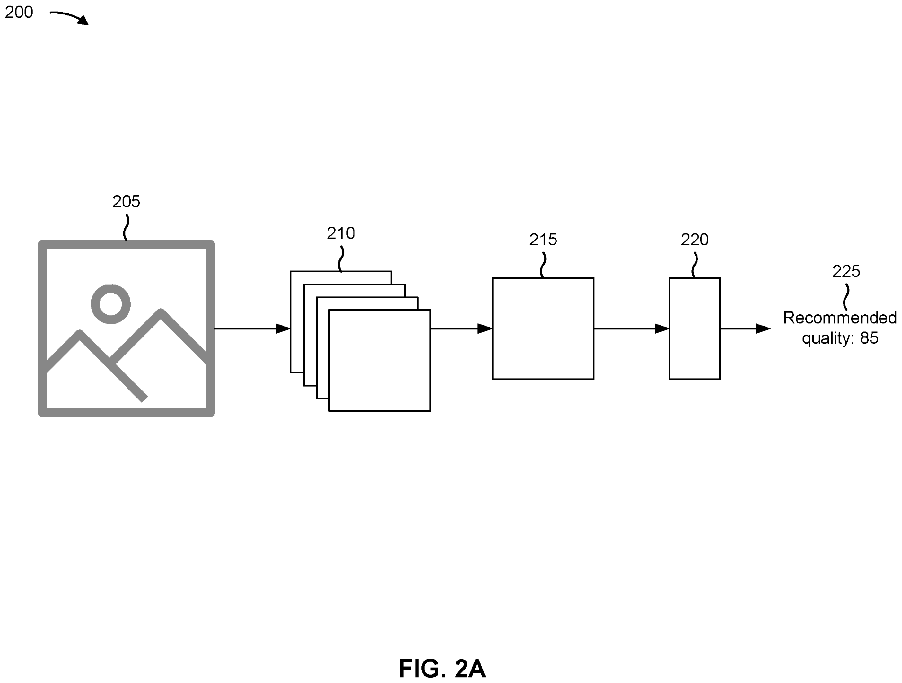

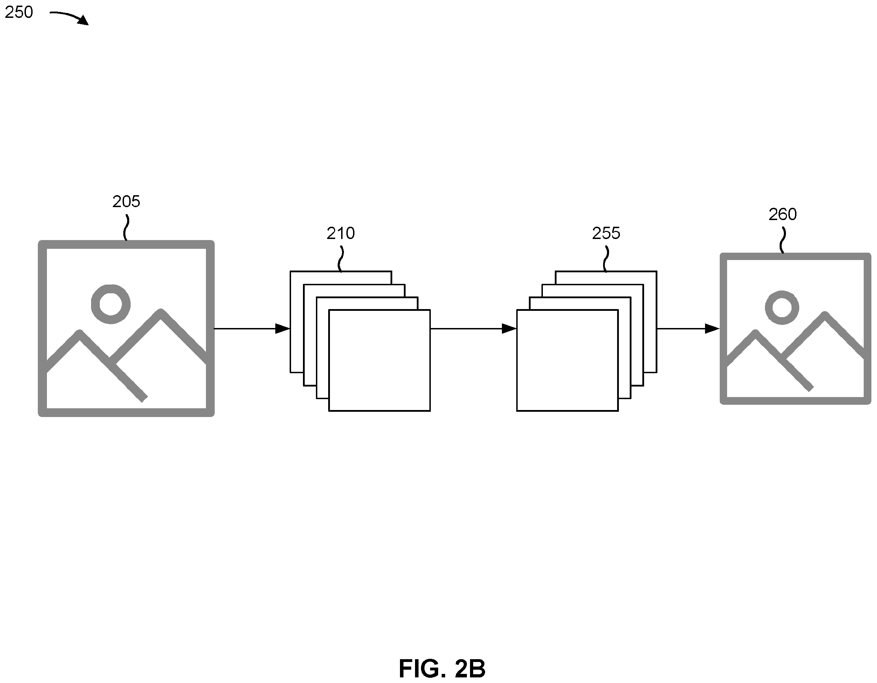

Although the example 100 is described in connection with the neural network generating the adjusted image directly (e.g., as described further in connection with Fig. 2B), other examples may include the neural network generating a recommended quality for the image (e.g., as described further in connection with Fig. 2A). Accordingly, the user device may generate the adjusted image using the recommended quality output by the neural network.

The user device may verify that the adjusted image satisfies the size threshold. For example, the user device may determine that a size of the adjusted image (e.g., in kilobytes, megabytes, pixels, or megapixels, among other examples) satisfies the size threshold. In another example, the user device may determine that an aspect ratio (or another property) of the adjusted image satisfies the size threshold.

The user device may provide the adjusted image to the service. For example, as shown by reference number 125, the user device may transmit, and the remote server may receive (e.g., on behalf of the service), the adjusted image. In one example, the user device may provide the adjusted image to an API associated with the service. In another example, the user device may provide the adjusted image to a function of a software application communicating with the service (e.g., the web browser or the app, as described above). Additionally, or alternatively, the user device may transmit an HTTP message that includes the adjusted image.

Accordingly, the user device may upload the adjusted image to the remote server (which provides the service). In some implementations, the user may provide input that triggers the user device to transmit the adjusted image. For example, the user device may output (e.g., via an output component of the user device) the adjusted image for review by the user. Accordingly, the user may provide input (e.g., via an input component of the user device) to approve the adjusted image (and thus trigger transmission of the adjusted image to the remote server). Other examples may include the user device automatically transmitting the adjusted image (e.g., in response to verifying that the adjusted image satisfies the size threshold).

By using techniques as described in connection with Fig. 1, the user device uses the neural network (executed locally) to reduce a size of the image according to the size threshold. Because the neural network is executed locally, the user device conserves network resources that would have been spent, and reduces latency that would have been incurred, were the user device to apply a remote neural network to reduce the size of the image. Additionally, the neural network is faster and less time-consuming than a binary search.

As indicated above, Fig. 1 is provided as an example. Other examples may differ from what is described with regard to Fig. 1. The number and arrangement of devices shown in Fig. 1 are provided as an example. In practice, there may be additional devices, fewer devices, different devices, or differently arranged devices than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) shown in Fig. 1 may perform one or more functions described as being performed by another set of devices shown in Fig. 1.

Figs. 2A and 2B are diagrams of example neural networks 200 and 250, respectively, associated with image compression. The neural network 200 or the neural network 250 may be implemented by a user device, which is described in more detail below in connection with Fig. 3 and Fig. 4.

As shown in Fig. 2A, the neural network 200 may accept, at an input layer, an image 205. The neural network 200 may include one or more convolutional layers 210 that convert the image 205 into sets of matrices. In some implementations, the neural network 200 may include at least one fully connected layer 215. Additionally, or alternatively, the neural network 200 may include at least one pooling layer 220. Accordingly, the neural network 200 may generate, as output, a recommended quality 225. The recommended quality 225 in Fig. 2A is 85 (out of 100). Accordingly the user device may downgrade the image 205 to the recommended quality 225 in order to satisfy a size threshold.

As shown in Fig. 2B, the neural network 250 may accept, at an input layer, an image 205. The neural network 250 may include one or more convolutional layers 210 that convert the image 205 into sets of matrices. The neural network 250 may further include one or more deconvolutional layers 255 that convert the sets of matrices back into an adjusted image 260. Accordingly, the neural network 250 may generate, as output, the adjusted image 260. Accordingly the user device may use the adjusted image 260, in lieu of the image 205, in order to satisfy a size threshold.

As indicated above, Figs. 2A-2B are provided as examples. Other examples may differ from what is described with regard to Figs. 2A-2B. For example, the neural network 200 or the neural network 250 may further accept an indication of the size threshold as input (e.g., at an input layer).

Fig. 3 is a diagram of an example environment 300 in which systems and/or methods described herein may be implemented. As shown in Fig. 3, environment 300 may include an OS 310 and a mobile application 320 (e.g., supported by the OS 310), as described in more detail below. The OS 310 and the mobile application 320 may be executed on a user device. The user device may include a communication device. For example, the user device may include a wireless communication device, a user equipment (UE), a mobile phone (e.g., a smart phone or a cell phone, among other examples), a laptop computer, a tablet computer, a handheld computer, a desktop computer, a gaming device, a wearable communication device (e.g., a smart wristwatch or a pair of smart eyeglasses, among other examples), an Internet of Things (IoT) device, or a similar type of device. The user device may include an output component (e.g., a speaker device to transmit audio to a user and/or a screen to display images to the user). The user device may further include an input device to facilitate interaction with a user. Example input devices include a microphone, a keyboard, a touchscreen, and/or a mouse. Additionally, as further shown in Fig. 3, environment 300 may include a remote server 350 providing a service. Devices and/or elements of environment 300 may interconnect via wired connections and/or wireless connections.

The OS 310 may include system software capable of managing hardware of the user device (which may include, for example, one or more components of device 400 of Fig. 4) and providing an environment for execution of higher-level software, such as the mobile application 320. For example, the OS 310 may include a kernel (e.g., a Windows-based kernel, a Linux kernel, a Unix-based kernel, such as an Android kernel, an iOS kernel, and/or another type of kernel) managing the hardware and library functions that may be used by the higher-level software. The OS 310 may additionally provide a UI and process input from a user.

The mobile application 320 may include an executable capable of running on a user device using the OS 310. In some implementations, the mobile application 320 may communicate with the remote server 350. For example, the mobile application 320 may use an HTTP, a file transfer protocol (FTP), and/or another Internet- or network-based protocol to request information from, transmit information to, and receive information from, the remote server 350.

The remote server 350 may include a remote computing device that provides information to requesting devices over the Internet and/or another network (e.g., a cellular network, a public land mobile network (PLMN), a local area network (LAN), a wide area network (WAN), a private network, the Internet, and/or a combination of these or other types of networks). Additionally, the remote server 350 may provide the service (e.g., database lookups, model executions, or identify verification, among other examples) for requesting devices. The remote server 350 may include a standalone server, one or more servers included on a server farm, or one or more servers spread across a plurality of server farms. In some implementations, the remote server 350 may include a cloud computing system. As an alternative, the remote server 350 may include one or more devices, such as device 400 of Fig. 4, that may include a standalone server or another type of computing device.

The number and arrangement of devices and networks shown in Fig. 3 are provided as an example. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

Fig. 4 is a diagram of example components of a device 400 associated with image compression based on a size threshold. The device 400 corresponds to one or more of a user device and/or a remote server. In some implementations, a user device and/or a remote server may include one or more devices 400 and/or one or more components of the device 400. In the example shown in Fig. 4, the device 400 includes a bus 410, a processor 420, a memory 430, an input component 440, an output component 450, and/or a communication component 460.

The bus 410 includes one or more components that enable wired and/or wireless communication among the components of the device 400. The bus 410 couples together two or more components of Fig. 4, such as via operative coupling, communicative coupling, electronic coupling, and/or electric coupling. For example, the bus 410 may include an electrical connection (e.g., a wire, a trace, and/or a lead) and/or a wireless bus. The processor 420 includes a central processing unit, a graphics processing unit, a microprocessor, a controller, a microcontroller, a digital signal processor, a field-programmable gate array, an application-specific integrated circuit, and/or another type of processing component. The processor 420 may be implemented in hardware, firmware, or a combination of hardware and software. In some implementations, the processor 420 includes one or more processors capable of being programmed to perform one or more operations or processes described elsewhere herein.

The memory 430 includes volatile and/or nonvolatile memory, such as random access memory (RAM), read only memory (ROM), a hard disk drive, and/or another type of memory (e.g., a flash memory, a magnetic memory, and/or an optical memory). The memory 430 may include internal memory (e.g., RAM, ROM, or a hard disk drive) and/or removable memory (e.g., removable via a universal serial bus connection). In some implementations, the memory 430 is a non-transitory computer-readable medium. The memory 430 stores information, one or more instructions, and/or software (e.g., one or more software applications) related to the operation of the device 400. In some implementations, the memory 430 includes one or more memories that are coupled (e.g., communicatively coupled) to one or more processors (e.g., processor 420), such as via the bus 410. Communicative coupling between a processor 420 and a memory 430 enables the processor 420 to read and/or process information stored in the memory 430 and/or to store information in the memory 430.

The input component 440 enables the device 400 to receive input, such as user input and/or sensed input. For example, the input component 440 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 450 enables the device 400 to provide output, such as via a display, a speaker, and/or a light-emitting diode. The communication component 460 enables the device 400 to communicate with other devices via a wired connection and/or a wireless connection. For example, the communication component 460 may include a receiver, a transmitter, a transceiver, a modem, a network interface card, and/or an antenna.

In some implementations, the device 400 performs one or more operations or processes described herein. For example, a non-transitory computer-readable medium (e.g., memory 430) may store a set of instructions (e.g., one or more instructions or code) for execution by the processor 420. The processor 420 may execute the set of instructions to perform one or more operations or processes described herein. In some implementations, execution of the set of instructions, by one or more processors 420, causes the one or more processors 420 and/or the device 400 to perform one or more operations or processes described herein. In some implementations, hardwired circuitry is used instead of or in combination with the instructions to perform one or more operations or processes described herein. Additionally, or alternatively, the processor 420 may be configured to perform one or more operations or processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

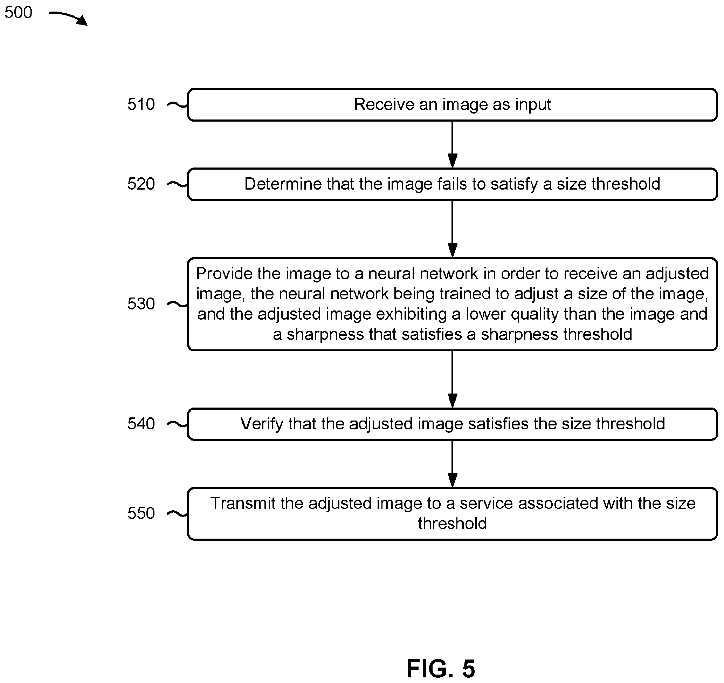

Fig. 5 is a flowchart of an example process 500 associated with image compression based on a size threshold. In some implementations, one or more process blocks of Fig. 5 may be performed by a user device. In some implementations, one or more process blocks of Fig. 5 may be performed by another device or a group of devices separate from or including the user device, such as a remote server Additionally, or alternatively, one or more process blocks of Fig. 5 may be performed by one or more components of the device 400, such as processor 420, memory 430, input component 440, output component 450, and/or communication component 460.

As shown in Fig. 5, process 500 may include receiving an image as input (block 510). For example, the user device (e.g., using processor 420, memory 430, input component 440, and/or communication component 460) may receive an image as input, as described above in connection with Fig. 1. As an example, a user may provide input that indicates a location of the image, and the user device may receive the image from a memory of the user device or from a remote device storing the image. In another example, the user device may capture the image using input component 440. In some implementations, the user may provide input that triggers the input component 440 to capture the image.

As further shown in Fig. 5, process 500 may include determining that the image fails to satisfy a size threshold (block 520). For example, the user device (e.g., using processor 420 and/or memory 430) may determine that the image fails to satisfy a size threshold, as described above in connection with Fig. 1. As an example, the user device may determine that a size of the image (e.g., in kilobytes, megabytes, pixels, or megapixels, among other examples) fails to satisfy the size threshold. In another example, the user device may determine that an aspect ratio (or another property) of the image fails to satisfy the size threshold.

As further shown in Fig. 5, process 500 may include providing the image to a neural network in order to receive an adjusted image, the neural network being trained to adjust a size of the image, and the adjusted image exhibiting a lower quality than the image and a sharpness that satisfies a sharpness threshold (block 530). For example, the user device (e.g., using processor 420 and/or memory 430) may provide the image to a neural network in order to receive an adjusted image, the neural network being trained to adjust a size of the image, and the adjusted image exhibiting a lower quality than the image and a sharpness that satisfies a sharpness threshold, as described above in connection with reference numbers 115 and 120 of Fig. 1. As an example, the user device may apply the neural network locally in order to reduce network overhead and latency. In some implementations, the neural network may include one or more fast Fourier convolution blocks (e.g., to quickly inpaint over background objects in order to reduce a size of the image while retaining quality for an object of interest). Additionally, or alternatively, the neural network may include no more than six convolutional layers. As a result, the neural network is faster than a binary search.

As further shown in Fig. 5, process 500 may include verifying that the adjusted image satisfies the size threshold (block 540). For example, the user device (e.g., using processor 420 and/or memory 430) may verify that the adjusted image satisfies the size threshold, as described above in connection with Fig. 1. As an example, the user device may determine that a size of the adjusted image (e.g., in kilobytes, megabytes, pixels, or megapixels, among other examples) satisfies the size threshold. In another example, the user device may determine that an aspect ratio (or another property) of the adjusted image satisfies the size threshold.

As further shown in Fig. 5, process 500 may include transmitting the adjusted image to a service associated with the size threshold (block 550). For example, the user device (e.g., using processor 420, memory 430, and/or communication component 460) may transmit the adjusted image to a service associated with the size threshold, as described above in connection with reference number 125 of Fig. 1. As an example, the user device may provide the adjusted image to an API associated with the service. In another example, the user device may provide the adjusted image to a function of a software application communicating with the service. In another example, the user device may transmit an HTTP message that includes the adjusted image.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel. The process 500 is an example of one process that may be performed by one or more devices described herein. These one or more devices may perform one or more other processes based on operations described herein, such as the operations described in connection with Fig. 1 and/or Figs. 2A-2B. Moreover, while the process 500 has been described in relation to the devices and components of the preceding figures, the process 500 can be performed using alternative, additional, or fewer devices and/or components. Thus, the process 500 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code-it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A system for compressing an image based on a size threshold, the system comprising:
one or more memories; and
one or more processors, communicatively coupled to the one or more memories, configured to:
receive the image as input from a user;
determine that the image fails to satisfy the size threshold;
provide the image to a neural network in order to receive an adjusted image,
wherein the neural network is trained to adjust a combination of padding around an object of interest and a size of the image, and
wherein the adjusted image exhibits a lower quality than the image and a sharpness that satisfies a sharpness threshold;
verify that the adjusted image satisfies the size threshold; and
transmit the adjusted image to a service associated with the size threshold.

2. The system of claim 1, wherein the one or more processors are configured to:
receive an indication of the size threshold.

3. The system of claim 1 or 2, wherein, to transmit the adjusted image to the service, the one or more processors are configured to:
(a) provide the adjusted image to an application programming interface (API) associated with the service; and/or
(b) provide the adjusted image to a function of a software application communicating with the service.

4. The system of any one of claims 1 to 3, wherein the neural network includes: (a) one or more fast Fourier convolution blocks; and/or (b) no more than six convolutional layers.

5. The system of any one of claims 1 to 4, wherein the one or more processors are configured to:
(a) detect the object of interest in the image; and provide a mask, to the neural network, corresponding to the object of interest; and/or
(b) detect an outline of the object of interest in the image; and indicate the outline to the neural network.

6. A method of compressing an image based on a size threshold, comprising:
receiving, at a user device, the image as input;
determining, by the user device, that the image fails to satisfy the size threshold;
providing, by the user device, the image to a neural network in order to receive an adjusted image,
wherein the neural network is trained to adjust a size of the image, and
wherein the adjusted image exhibits a lower quality than the image and a sharpness that satisfies a sharpness threshold;
verifying, by the user device, that the adjusted image satisfies the size threshold; and
transmitting the adjusted image from the user device and to a service associated with the size threshold.

7. The method of claim 6, wherein the adjusted image further exhibits: (a) a brightness that satisfies a brightness threshold; and/or (b) a color saturation that satisfies a saturation threshold.

8. The method of claim 6 or 7, wherein one or more weights of the neural network are optimized for text legibility.

9. The method of any one of claims 6 to 8, further comprising:
detecting a face in the image; and
providing a mask, to the neural network, corresponding to the face.

10. The method of any one of claims 6 to 9, wherein transmitting the adjusted image comprises:
transmitting a hypertext transfer protocol message with the adjusted image.

11. A non-transitory computer-readable medium storing a set of instructions for compressing an image based on a size threshold, the set of instructions comprising:
one or more instructions that, when executed by one or more processors of a mobile device, cause the mobile device to:
capture an image using an input component of the mobile device;
receive, from a service, an indication of the size threshold;
apply a neural network to the image, in response to the image failing to satisfy the size threshold, in order to generate an adjusted image,
wherein the neural network is trained to adjust a size of the image while satisfying a sharpness threshold; and
provide the adjusted image to the service.

12. The non-transitory computer-readable medium of claim 11, wherein the one or more instructions, when executed by the one or more processors, cause the mobile device to:
transmit, to the service, an inquiry,
wherein the indication of the size threshold is received in response to the inquiry.

13. The non-transitory computer-readable medium of claim 11 or 12, wherein the one or more instructions, that cause the mobile device to provide the adjusted image to the service, cause the mobile device to:
upload the adjusted image to a remote server providing the service.

14. The non-transitory computer-readable medium of any one of claims 11 to 13, wherein the neural network is applied by a mobile application executed by the mobile device and communicating with the service.

15. The non-transitory computer-readable medium of any one of claims 11 to 13, wherein the neural network is applied by an operating system of the mobile device;
wherein, optionally, the one or more instructions, that cause the mobile device to apply the neural network to the image, cause the mobile device to:
provide the image to the operating system with a request to apply the neural network;
and
receive the adjusted image from the operating system in response to the request.
